# EUROPÄISCHE PATENTANMELDUNG

(11) **EP 3 476 624 A1**
(43) Veröffentlichungstag der Anmeldung: **01.05.2019**
(21) Anmeldenummer: 18181842.8
(22) Anmeldetag: 05.07.2018
(51) Int. Cl.: B60C 9/20, B60C 9/00, B60C 1/00

(54) **FAHRZEUGLUFTREIFEN**

(30) Priorität: 24.10.2017 DE 102017218948
(71) Anmelder: Continental Reifen Deutschland GmbH, 30165 Hannover (DE)
(72) Erfinder: Werner, Viktoria, 30827 Garbsen (DE); Rajan, Vipin, 30952 Ronnenberg (DE); Kramer, Thomas, 32049 Herford (DE)
(74) Vertreter: Finger, Karsten

(57) **Zusammenfassung**

Die Erfindung betrifft einen Fahrzeugluftreifen mit einer luftundurchlässigen Innenschicht, einer Radialkarkasse aus gummierten Festigkeitsträgern, die vom Zenitbereich des Reifens über die Seitenwände bis in den Wulstbereich reicht und dort durch Umschlingen zugfester Wulstkerne verankert ist, einem radial außen befindlichen, Profilrillen aufweisenden Gummilaufstreifen, einem Gürtel aus gummierten Festigkeitsträgern zwischen dem Gummilaufstreifen und der Karkasse sowie ggf einer Gürtelbandage, die zumindest die Gürtelränder abdeckt.

Zur Verbesserung der Haltbarkeit von Fahrzeugluftreifen weist die Radialkarkasse und/oder der Gürtel einen Stahlcord aus Stahlfilamenten oder Stahlfilamente als Festigkeitsträger auf, wobei die Stahlfilamente eine Messingbeschichtung aufweisen, die 1 bis 10 Gew.-% eines oder zweier Metalle ausgewählt aus der Gruppe bestehend aus Cobalt, Nickel, Zinn, Indium, Mangan, Eisen, Bismut und Molybdän enthält.

## Beschreibung

Die Erfindung betrifft einen Fahrzeugluftreifen mit einer luftundurchlässigen Innenschicht, einer Radialkarkasse aus gummierten Festigkeitsträgern, die vom Zenitbereich des Reifens über die Seitenwände bis in den Wulstbereich reicht und dort durch Umschlingen zugfester Wulstkerne verankert ist, einem radial außen befindlichen, Profilrillen aufweisenden Gummilaufstreifen, einem Gürtel aus gummierten Festigkeitsträgern zwischen dem Gummilaufstreifen und der Karkasse sowie ggf. einer Gürtelbandage, die zumindest die Gürtelränder abdeckt.

Fahrzeugluftreifen mit dem vorgenannten Aufbau sind hinlänglich bekannt und werden weltweit vertrieben. Neben Reifen ist auch eine Vielzahl anderer Gummiprodukte mit Festigkeitsträgern verstärkt. Zum Einsatz können dabei metallische, mineralische oder textile Festigkeitsträger kommen. Kommen Gummimischung und Festigkeitsträger in Kontakt, z. B. während der Vulkanisation, so bildet sich ohne vorherige spezielle Behandlung der Festigkeitsträger in der Regel keine ausreichend beanspruchbare Haftung zwischen Gummierungsmischung und Festigkeitsträger aus. So kann es dann bei dem Einsatz des Gummiproduktes, insbesondere unter dynamischer Belastung, zu einer Trennung der einzelnen Bauteile und damit zu einem Produktausfall kommen.

Um die Haftung zwischen Gummi und Festigkeitsträgern zu verbessern, werden üblicherweise ein- oder mehrschichtige Haftsysteme eingesetzt.

In der Reifenindustrie besteht das Haftsystem für Festigkeitsträger aus Stahl aus einer Messingschicht (Schicht aus einer Kupfer-Zink-Legierung) auf dem Stahl in Kombination mit einer schwefelhaltigen Haftgummimischung (Direkthaftverfahren). Für andere Gummiprodukte, wie Transportbänder oder Hochdruckschläuche, kann auch ein verzinkter Stahlcord eingesetzt werden, der sich durch eine gute Korrosionsbeständigkeit auszeichnet.

Die Haftmischungen für das Direkthaftverfahren bei vermessingten Stahlcorden enthalten üblicherweise organische Cobaltsalze, ein System aus Resorcin, Formaldehyd bzw. einem Formaldehydspender und Kieselsäure sowie eine größere Menge an Schwefel.

Das System aus Resorcin, Formaldehyd und Kieselsäure bildet während der Vulkanisation haftungsfördernde Harze aus, die mit dem Kautschuk unter Ausbildung von C-C-Bindungen vernetzen. Die Haftung zwischen Gummi und der Oberfläche des vermessingten Stahlcordes wird beim Direkthaftverfahren vermutlich durch eine Zinksulfid- und/oder Kupfersulfid-Zwischenschicht hervorgerufen. Diese Schicht entsteht aus dem Zink der vermessingten Stahlcordoberfläche und dem freien Schwefel in der Haftmischung. Es entstehen bei der Vulkanisation so genannte Dendrite, die in die Kautschukmatrix hineinwachsen. Diese bewirken eine physikalische sowie mechanische Verankerung. Außerdem werden noch kovalente chemische Bindungen zwischen den Schwefelbrücken des Gummis und dem Zinksulfid- und/oder Kupfersulfid aufgebaut, wobei die Haftungsausbildung und Vernetzungsreaktion synchron verlaufen.

Der Zusatz der organischen Cobaltsalze in den Haftmischungen erfolgt, um den Abbau der Dendrite an der Stahloberfläche zu verlangsamen, da die durch Diffusion nach und nach abgebauten Zinkatome durch Cobaltatome in den Strukturen ersetzt werden (Verlangsamung der Entzinkung). Die Cobaltsalze sorgen daher für eine bessere Haftung bei Alterung. Insbesondere die Haltbarkeit der Haftschicht unter Einwirkung von Feuchtigkeit wird durch den Einsatz von Cobaltsalzen in der Haftmischng verbessert.

Die Cobaltsalze in den Haftmischungen stellen in mehrerer Hinsicht ein Problem dar und man ist bestrebt, diese aus den Haftmischungen zu eliminieren. Zum einen sind die üblicherweise organischen Cobaltsalze teuer und erhöhen die Mischungskomplexität, zum anderen greifen die Salze in den Vulkanisationsmechnismus ein und führen zu Ausblühungen von organischen Säuren, wie z. B. Stearinsäure, und damit zu einer reduzierten Klebrigkeit der unvulkanisierten Bauteile. Zudem erfordert die Handhabung von Cobaltsalzen in der Produktion viel Umsicht, da diese zum Teil als gesundheitsgefährdend eingestuft sind.

Um auf Cobaltsalze in Haftmischungen zu verzichten, ist es z. B. aus der EP 2 516 729 B1 bekannt, die Stahlfilamente mit einer speziellen Messingbeschichtung zu versehen, die Cobalt oder Nickel enthält. Derartige Stahlfilamente können in Form von Monofilamenten oder Stahlcorden aus diesen Stahlfilamenten zur Verstärkung unterschiedlichster Gummiprodukte (Kautschukartikel) wie Reifen, Schläuche, Riemen oder Gurte eingesetzt werden.

Stahlfilamente mit einer Messingbeschichtung, die Cobalt enthält, können an unterschiedlichsten Stellen im Reifen verwendet werden, dazu zählen z. B. Wulstverstärker oder Abdeckstreifen. Es hat sich aber gezeigt, dass die Stahlfilamente bei Verwendung im Reifen nicht an allen Einsatzorten zu einer höheren Haltbarkeit des Reifens führen.

Der vorliegenden Erfindung liegt die Aufgabe zugrunde, einen Fahrzeugluftreifen bereitzustellen, der sich durch eine verbesserte Haltbarkeit auszeichnet.

Gelöst wird die Aufgabe erfindungsgemäß dadurch, dass bei einem Fahrzeugluftreifen der eingangs genannten Art die Radialkarkasse und/oder der Gürtel einen Stahlcord aus Stahlfilamenten oder Stahlfilamente als Festigkeitsträger aufweist, wobei die Stahlfilamente eine Messingbeschichtung aufweisen, die 1 bis 10 Gew.-% eines oder zweier Metalle ausgewählt aus der Gruppe bestehend aus Cobalt, Nickel, Zinn, Indium, Mangan, Eisen, Bismut und Molybdän enthält.

Fahrzeugluftreifen mit derartigen Festigkeitsträgern in der Radialkarkasse und/oder dem Gürtel zeichnen sich durch eine hohe Haltbarkeit im Fahrbetrieb aus. Es können sowohl nur die Radialkarkasse und nur der Gürtel die Festigkeitsträger enthalten, als auch die Radialkarkasse und der Gürtel gleichzeitig. Neben der Radialkarkasse und dem Gürtel können auch andere Bauteile des Reifens, wie der Wulstverstärker oder sonstige Abdeckstreifen, die Stahlcorde oder Stahlfilamente als Festigkeitsträger aufweisen.

Durch die Anwesenheit der angegebenen Metalle in der Messingbeschichtung werden die chemischen Abläufe in der Haftschicht positiv beeinflusst, insbesondere wird dem Abbau der für die Haftung wichtigen Dendrite entgegengewirkt.

Vorzugsweise weisen die Stahlfilamente eine Messingbeschichtung auf, die 1 bis 10 Gew.-% Cobalt und/oder Nickel enthält. Diese Metalle haben sich als besonders wirksam im Hinblick auf den Abbau der Dendrite gezeigt.

Gemäß einer vorteilhaften Weiterbildung der Erfindung weisen die Stahlfilamente eine Messingbeschichtung auf, die 2 bis 8 Gew.-% Cobalt und/oder Nickel enthält. Mit diesen Mengen kann ein besonders guter Erhalt der Haftung zwischen Gummi und Festigkeitsträger auch bei Alterung erreicht werden.

Die Stahlfilamente weisen vorzugsweise eine Messingbeschichtung auf, die 55 bis 75 Gew.-%, bevorzugt 60 bis 70 Gew.-%, Kupfer enthält. Diese Beschichtungen lassen sich gut aufbringen und führen zu guten Haftergebnissen.

Als besonders vorteilhaft hat es sich erwiesen, wenn die Stahlfilamente eine Messingbeschichtung aufweisen, die 2 bis 8 Gew.-% Cobalt enthält. Diese Mengen an Cobalt wirken dem Abbau der Dendrite besonders effektiv entgegen.

Bei den Festigkeitsträgern der Radialkarkasse und dem Gürtel kann es sich sowohl um Stahlcorde aus Stahlfilamenten als Festigkeitsträger handeln als auch um Stahl(mono)filamente, die parallel zueinander in der gummierten Lage vorliegen.

Da Stahl(mono)filamente im Hinblick auf die Haftung besonders kritisch anzusehen sind, weist die Radialkarkasse und/oder der Gürtel vorzugsweise Stahl(mono)filamente als Festigkeitsträger auf. Bei diesen Reifen konnten so die besten Ergebnisse im Hinblick auf die Haltbarkeitsverbesserung erzielt werden.

Als Kautschukmischung für die Gummierung der Festigkeitsträger für den Gürtel und/oder die Radialkarkasse können alle dem Fachmann bekannten Gummierungsmischungen eingesetzt werden.

Die Gummierungsmischungen enthalten die in der Kautschukindustrie üblichen Bestandteile. Zu diesen Bestandteilen zählen die im Folgenden genannten.

Die Gummierungsmischungen enthalten zumindest einen Kautschuk. Als Kautschuke können Dienkautschuke eingesetzt werden. Zu den Dienkautschuken zählen alle Kautschuke mit einer ungesättigten Kohlenstoffkette, die sich zumindest teilweise von konjugierten Dienen ableiten.

Die Kautschukmischung kann als Dienkautschuk vorzugsweise Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.

Enthält die Kautschukmischung als Dienkautschuk Polybutadien (BR), kann es sich um cis-1,4-Polybutadien handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Als weitere Dienkautschuke sind Vinyl-Polybutadiene und Styrol-Butadien-Copolymere einsetzbar. Bei den Vinyl-Polybutadienen und Styrol-Butadien-Copolymeren kann es sich um lösungspolymerisierte (Styrol)-Butadien-Copolymere (S-(S)BR) mit einem Styrolgehalt, bezogen auf das Polymer, von ca. 0 bis 45 Gew.-% und einem Vinylgehalt (Gehalt an 1,2-gebundenem Butadien, bezogen auf das gesamte Polymer) von 10 bis 90 Gew.-% handeln, welche zum Beispiel unter Verwendung von Lithiumalkylen in organischem Lösungsmittel hergestellt werden können. Die S-(S)BR können auch gekoppelt und endgruppenmodifiziert sein. Es können aber auch emulsionspolymerisierte Styrol-Butadien-Copolymere (E-SBR) sowie Mischungen aus E-SBR und S-(S)BR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Die in der Mischung eingesetzten Dienkautschuke, insbesondere die Styrol-Butadien-Copolymere, können auch in teilweiser oder vollständig funktionalisierter Form eingesetzt werden. Die Funktionalisierung kann dabei mit Gruppen erfolgen, die mit den verwendeten Füllstoffen, insbesondere mit OH-Gruppen tragenden Füllstoffen, wechselwirken können. Es kann sich dabei z. B. um Funktionalisierungen mit Hydroxylgruppen und/oder Epoxygruppen und/oder Siloxangruppen und/oder Aminogruppen und/oder Phthalocyaningruppen und/oder Carboxygruppen und/oder Silansulfidgruppen handeln. Die Dienkautschuke können zusätzlich oder alternativ auch gekoppelt sein.

Zusätzlich zu den genannten Dienkautschuken kann die Mischung aber auch noch andere Kautschuktypen, wie z. B. Styrol-Isopren-Butadien-Terpolymer, Butylkautschuk, Halobutylkautschuk oder Ethylen-Propylen-Dien-Kautschuk (EPDM), enthalten.

Die Kautschukmischung für die Gummierung kann unterschiedliche Füllstoffe, wie Ruße, Kieselsäuren, Alumosilicate, Kreide, Stärke, Magnesiumoxid, Titandioxid oder Kautschukgele in üblichen Mengen enthalten, wobei die Füllstoffe in Kombination eingesetzt werden können.

Wird Ruß in der Kautschukmischung eingesetzt, handelt es sich bevorzugt um solche Typen, die eine CTAB-Oberfläche (gemäß ASTM D 3765) von mehr als 30 m²/g aufweisen. Diese lassen sich einfach einmischen und gewährleisten einen geringen Wärmeaufbau.

Sind Kieselsäuren in der Mischung enthalten, kann es sich um die für Reifenkautschukmischungen üblichen Kieselsäuren handeln. Besonders bevorzugt ist es, wenn eine fein verteilte, gefällte Kieselsäure verwendet wird, die eine CTAB-Oberfläche (gemäß ASTM D 3765) von 30 bis 350 m²/g, vorzugsweise von 110 bis 250 m²/g, aufweist. Als Kieselsäuren können sowohl konventionelle Kieselsäuren wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen.

Enthält die Kautschukmischung Kieselsäure oder andere polare Füllstoffe, können der Mischung zur Verbesserung der Verarbeitbarkeit und zur Anbindung des polaren Füllstoffes an den Kautschuk Silan-Kupplungsagenzien, wie z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, zugesetzt werden.

Des Weiteren kann die Kautschukmischung für die Gummierung übliche Zusatzstoffe in üblichen Gewichtsteilen enthalten. Zu diesen Zusatzstoffen zählen Weichmacher, wie z. B. Glyceride, Faktisse, Kohlenwasserstoffharze, aromatische, naphthenische oder paraffinische Mineralölweichmacher (z. B. MES (mild extraction solvate) oder TDAE (treated distillate aromatic extract)), Öle auf Basis nachwachsender Rohstoffe (wie z. B. Rapsöl, Terpenöle (z. B. Orangenöle) oder Faktisse), so genannte BTL-Öle (wie sie in der DE 10 2008 037714 A1 offenbart sind) oder flüssige Polymere (wie z. B. flüssiges Polybutadien)); Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Zinkoxid und Fettsäuren (z. B. Stearinsäure), Wachse, Klebharze, wie z. B. Kohlenwasserstoffharze und Kolophonium, und Mastikationshilfsmittel, wie z. B. 2,2'-Dibenzamidodiphenyldisulfid (DBD).

Die Kautschukmischung für die Gummierung kann auch die üblichen Methylenakzeptor-Methylendonor-Paare, wie Resorcin bzw. Resorcinäquivalente und Formaldehyd bzw. Formaldehydspender (z. B. z. B. Hexamethoxymethylmelamin (HMMM) und/oder Hexamethylentetramin (HMT)) zur Haftungsverbesserung enthalten.

Die Kautschukmischung für die Gummierung der Festigkeitsträger kann, um einen besonders hohen Schutz der Haftung vor Alterung zu erzielen, Cobaltsalze enthalten. In Kombination mit dem Cobalt und/oder Nickel in der Messingbeschichtung der Stahlfilamente erhält man zwei Quellen für Metalle, die das aus den Zinkdendriten diffundierende Zink ersetzen können.

Gemäß einer bevorzugten Weiterbildung der Erfindung ist die Kautschukmischung für die Gummierung der Festigkeitsträger für den Gürtel und/oder die Radialkarkasse jedoch frei von zugesetzten Cobaltsalzen. Die Komplexität der Gummierungsmischung wird dadurch erniedrigt. Gleichzeitig verhindert man, dass die Cobaltsalze einen negativen Effekt auf die Vulkanisation haben. Auch Ausblühungen der Salze, die zu einer reduzierten Klebrigkeit der unvulkanisierten Bauteile führen, werden vermieden. Zusätzlich bietet sich der Vorteil, dass auf die oftmals als gesundheitsgefährdend eingestuften Cobaltsalze verzichtet werden kann.

Bei Verzicht auf Cobaltsalze in der Kautschukmischung für die Gummierung der Festigkeitsträger hat es sich als vorteilhaft zum Erhalt der gewünschten Vulkanisationskinetik erwiesen, dass die Kautschukmischung für die Gummierung der Festigkeitsträger für den Gürtel und/oder die Radialkarkasse 0,5 bis 5 phr Stearinsäure und/oder ein Metallsalz der Stearinsäure, vorzugsweise 0,5 bis 5 phr Zinkstearat, enthält.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. Die Masse aller in der Mischung vorhandenen Kautschuke addiert sich zu 100.

Die Vulkanisation der Kautschukmischung für die Gummierung wird in Anwesenheit von Schwefel und/oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 8 phr) der Kautschukmischung zugesetzt. Die Vulkanisation kann auch in Anwesenheit von sehr geringen Schwefelmengen in Kombination mit schwefelspendenden Substanzen erfolgen.

Des Weiteren kann die Gummierungsmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS) und Benzothiazyl-2-dicyclohexylsulfenamid (DCBS), Guanidinbeschleuniger wie z. B. N,N'-Diphenylguanidin (DPG), Dithiocarbamatbeschleuniger wie z. B. Zinkdibenzyldithiocarbamat, Disulfide, Thiophosphate. Die Beschleuniger können auch in Kombination miteinander eingesetzt werden, wobei sich synergistische Effekte ergeben können.
Auch weitere netzwerkbildende Systeme, wie z. B. Vulkuren®, Duralink®, Perkalink® oder Systeme, wie sie in der WO 2010/049261 A2 beschrieben sind, können in der Gummierungsmischung eingesetzt werden.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet und zur Gummierung der Festigkeitsträger verwendet.

Die erfindungsgemäßen Fahrzeugluftreifen werden nach dem Fachmann bekannten Verfahren hergestellt, wobei die Radialkarkasse und/oder der Gürtel den gummierten Stahlcord oder die gummierten Stahlfilamente als Festigkeitsträger aufweist, wobei die Stahlfilamente eine Cobalt und/oder Nickel aufweisende Messingbeschichtung enthalten. Die gummierten Stahlcorde können auch für andere Bauteile des Reifens eingesetzt werden, wie z. B. für den Wulstverstärker, weitere Abdeckstreifen oder andere Bauteile, für die üblicherweise metallische Festigkeitsträger vorgesehen werden.

Die Erfindung soll nun anhand von Vergleichs- und Ausführungsbeispielen im Zusammenhang mit Tabelle 1 näher erläutert werden.

Ein Stahlcord der Konstruktion 1+5x0,4 wurde zum einen mit Filamenten versehen, die eine übliche Messingbeschichtung ohne Cobalt aufwiesen (Cord A), zum anderen mit Filamenten versehen, die eine Messingbeschichtung mit 4 Gew.-% Cobalt aufwiesen (Cord B). Diese Corde wurden jeweils mit den in Tabelle 1 darstellten Kautschukmischungen gummiert, die Vulkanisationskinetik untersucht und nach Vulkanisation die Haftung ohne und mit Alterung unter unterschiedlichen Bedingungen nach folgender Norm ermittelt:
Stahlcordhaftung gemäß ASTM 2229/D1871 vor Alterung bei Raumtemperatur und nach Alterung bei 70 °C in mit Feuchtigkeit gesättigter Luft über 14 Tage, Einbettlänge 12,5 mm, Auszugsgeschwindigkeit 125 mm/min, Messung der Herausziehkraft und der Bedeckung mit Gummi (100 % = vollständige Bedeckung).

**Tabelle 1**

| **Bestandteile** | **Einheit** | **1** | **2** | **3** |
|---|---|---|---|---|
| Polyisopren | phr | 100 | 100 | 100 |
| RußN326 | phr | 62 | 62 | 62 |
| Weichmacher | phr | 6 | 6 | 6 |
| Alterungsschutzmittel | phr | 5,6 | 5,6 | 5,6 |
| Zinkoxid | phr | 7 | 7 | 7 |
| Resorcin (techn.) | phr | 2,4 | 2,4 | 2,4 |
| HMMM Harz 65 % | phr | 7,4 | 7,4 | 7,4 |
| Cobaltstearat | phr | 1,3 | - | - |
| Zinkstearat | phr | - | - | 1 |
| Beschleuniger | phr | 0,75 | 0,75 | 0,75 |
| Schwefel | phr | 4,5 | 4,5 | 4,5 |

| **Haftungseigenschaften** | | | | |
|---|---|---|---|---|
| **Cord A** | | | | |
| Herausziehkraft, ungealtert | N | 960 | 910 | 850 |
| Bedeckung, ungealtert | % | 100 | 97 | 96 |
| Herausziehkraft, gealtert 14 d, 70 °C, gesättigte Luft | N | 640 | 610 | 440 |
| Bedeckung, gealtert 14 d, 70 °C, gesättigte Luft | % | 94 | 93 | 84 |

| **Cord B** | | | | |
|---|---|---|---|---|
| Herausziehkraft, ungealtert | N | 960 | 900 | 870 |
| Bedeckung, ungealtert | % | 100 | 100 | 100 |
| Herausziehkraft, gealtert 14 d, 70 °C, gesättigte Luft | N | 680 | 800 | 730 |
| Bedeckung, gealtert 14 d, 70 °C, gesättigte Luft | % | 88 | 91 | 91 |

Aus der Tabelle 1 wird ersichtlich, dass beim Cord A ohne Cobalt in der Messingbeschichtung die Haftung ohne Cobaltsalze in der Gummierungsmischung abfällt und nicht mehr das Niveau der Referenz 1 mit den Cobaltsalzen in der Gummierungsmischung erreicht. Weist die Messingbeschichtung hingegen wie bei Cord B Cobalt auf, erzielt man vergleichbare Haftungswerte, unabhängig davon, ob Cobaltsalze in der Gummierungsmischung zugegeben wurden oder nicht. Dies wird besonders deutlich bei der Herausziehkraft nach 14-tägiger Alterung.

Der Zusatz von Zinkstearat in der Gummierungsmischung führte bei den Mischungen 1 und 3 zu einer Angleichung der Vulkanisationskinetik, während die Mischung 2 eine reduzierte Vulkanisationsgeschwindigkeit im Vergleich zu den Mischungen 1 und 3 aufwies.

Fahrzeugluftreifen, die eine Radialkarkasse und/oder einen Gürtel mit Stahlcorden oder Stahlfilamenten mit einer Cobalt enthaltenden Messingbeschichtung aufweisen, zeichnen sich durch eine verbesserte Haltbarkeit aus.

## Patentansprüche

1. Fahrzeugluftreifen mit einer luftundurchlässigen Innenschicht, einer Radialkarkasse aus gummierten Festigkeitsträgern, die vom Zenitbereich des Reifens über die Seitenwände bis in den Wulstbereich reicht und dort durch Umschlingen zugfester Wulstkerne verankert ist, einem radial außen befindlichen, Profilrillen aufweisenden Gummilaufstreifen, einem Gürtel aus gummierten Festigkeitsträgern zwischen dem Gummilaufstreifen und der Karkasse sowie ggf. einer Gürtelbandage, die zumindest die Gürtelränder abdeckt, **dadurch gekennzeichnet, dass** die Radialkarkasse und/oder der Gürtel einen Stahlcord aus Stahlfilamenten oder Stahlfilamente als Festigkeitsträger aufweist, wobei die Stahlfilamente eine Messingbeschichtung aufweisen, die 1 bis 10 Gew.-% eines oder zweier Metalle ausgewählt aus der Gruppe bestehend aus Cobalt, Nickel, Zinn, Indium, Mangan, Eisen, Bismut und Molybdän enthält.

2. Fahrzeugluftreifen nach Anspruch 1, **dadurch gekennzeichnet, dass** die Stahlfilamente eine Messingbeschichtung aufweisen, die 1 bis 10 Gew.-% Cobalt und/oder Nickel enthält.

3. Fahrzeugluftreifen nach Anspruch 2, **dadurch gekennzeichnet, dass** die Stahlfilamente eine Messingbeschichtung aufweisen, die 2 bis 8 Gew.-% Cobalt und/oder Nickel enthält.

4. Fahrzeugluftreifen nach zumindest einem der vorhergehenden Ansprüche, **dadurch gekennzeichnet, dass** die Stahlfilamente eine Messingbeschichtung aufweisen, die 55 bis 75 Gew.-% Kupfer enthält.

5. Fahrzeugluftreifen nach Anspruch 4, **dadurch gekennzeichnet, dass** die Stahlfilamente eine Messingbeschichtung aufweisen, die 60 bis 70 Gew.-% Kupfer enthält.

6. Fahrzeugluftreifen nach zumindest einem der vorhergehenden Ansprüche, **dadurch gekennzeichnet, dass** die Stahlfilamente eine Messingbeschichtung aufweisen, die 2 bis 8 Gew.-% Cobalt enthält.

7. Fahrzeugluftreifen nach zumindest einem der vorhergehenden Ansprüche, **dadurch gekennzeichnet, dass** die Radialkarkasse und/oder der Gürtel Stahlfilamente als Festigkeitsträger aufweist.

8. Fahrzeugluftreifen nach zumindest einem der vorhergehenden Ansprüche, **dadurch gekennzeichnet, dass** die Kautschukmischung für die Gummierung der Festigkeitsträger für den Gürtel und/oder die Radialkarkasse frei von zugesetzten Cobaltsalzen ist.

9. Fahrzeugluftreifen nach Anspruch 8, **dadurch gekennzeichnet, dass** die Kautschukmischung für die Gummierung der Festigkeitsträger für den Gürtel und/oder die Radialkarkasse 0,5 bis 5 phr Stearinsäure und/oder ein Metallsalz der Stearinsäure enthält.

10. Fahrzeugluftreifen nach Anspruch 9, **dadurch gekennzeichnet, dass** die Kautschukmischung für die Gummierung der Festigkeitsträger für den Gürtel und/oder die Radialkarkasse 0,5 bis 5 phr Zinkstearat enthält.
